# EUROPÄISCHE PATENTSCHRIFT

(11) **EP 1 751 454 B1**
(45) Veröffentlichungstag und Bekanntmachung des Hinweises auf die Patenterteilung: **18.11.2009**
(21) Anmeldenummer: 04734675.4
(22) Anmeldetag: 25.05.2004
(51) Int. Cl.: F16K 51/02, C23C 14/56

(54) **SCHLEUSENVENTIL, INSBESONDERE FÜR EINE BANDBEHANDLUNGSANLAGE**
LOCK VALVE IN PARTICULAR FOR A STRIP PROCESSING UNIT
CLAPET D'ARRET DESTINE, EN PARTICULIER, A UNE INSTALLATION DE MANIPULATION DE BANDES

(43) Veröffentlichungstag der Anmeldung: 14.02.2007
(73) Patentinhaber: Applied Materials GmbH & Co. KG, 63755 Alzenau (DE)
(72) Erfinder: HEIN, Stefan, 63825 Blankenbach (DE)
(74) Vertreter: Bockhorni & Kollegen
(86) Internationale Anmeldenummer: PCT/EP2004/005617
(87) Internationale Veröffentlichungsnummer: WO 2005/116501

(56) Entgegenhaltungen:
- EP-A- 0 291 952
- WO-A1-99/50472
- US-A- 3 351 348
- US-B1- 6 386 511
- PATENT ABSTRACTS OF JAPAN Bd. 013, Nr. 451 (C-643), 11. Oktober 1989 (1989-10-11) & JP 01 172570 A (KAWASAKI STEEL CORP; others: 01), 7. Juli 1989 (1989-07-07)

## Beschreibung

Die Erfindung bezieht sich auf ein Schleusenventil, insbesondere für eine Bandbehandlungsanlage oder -beschichtungsanlage, mit den Merkmalen des Oberbegriffs des Patentanspruchs 1.

Bandbehandlungsanlagen der hier in Rede stehenden Art dienen hauptsächlich zum Beschichten von flexiblen Bandsubstraten, z. B. Kunststofffolien, Magnetbändern, Filmen etc., im Vakuum (z. B. durch Sputtern, also Zerstäuben von Targets, das ggf. von Magnetfeldern unterstützt wird, Aufdampfen, PVD- oder CVD-Verfahren) ), aber auch zu weiteren Behandlungsformen wie Vorbehandlungen / Reinigen / Trocknen / Oberflächenaktivieren /Polymerisation etc. Hierbei ist es erforderlich, die in Ballen- oder Trommelform gewickelten Bandsubstrate oder Folien in die Anlage einzubringen und sie auf einer Lagerachse aufzunehmen, so dass das Bandsubstrat während des Beschichtungsdurchlaufs von diesem Ballen abgewickelt werden kann.

Jenseits / stromab der Beschichtungskammer(n) ist eine weitere Achse mit einer Aufwickeltrommel vorgesehen, auf welche das beschichtete Bandsubstrat wieder aufgewickelt wird.

Eine solche Beschichtungsanlage ist also grundsätzlich in Module unterteilbar (Abwickel-, Beschichtungs- und Aufwickelmodul).

Bei bekannten Anlagen sind die beiden beidseitig gelagerten Achsen oder Walzen zum Abwickeln und Aufwickeln des Bandsubstrats auf einer gemeinsamen rahmenartigen Basis angebracht, was den Vorteil hat, dass sie in einer konstanten und festen Lagebeziehung zueinander stehen. Wenn die beiden Achsen oder Walzen allerdings beidseits des Beschichtungsmoduls angeordnet sind, so ist es beim Spulenwechsel nur mithilfe von gesonderten Maßnahmen vermeidbar, auch die im Vakuum arbeitende Beschichtungskammer(n) zu belüften.

Es ist anzustreben, die im Vakuum arbeitende Beschichtungskammer nicht bei jedem Wechsel des Substratballens bzw. beim Entnehmen eines aus fertig beschichtetem Bandsubstrat neu gewickelten Ballens zu fluten / zu belüften.

Es ist deshalb schon bekannt, Schleusenventile zwischen den einzelnen Modulen vorzusehen. Damit wird das insgesamt wieder zu entlüftende Volumen deutlich verringert, da nur noch die Einlege- bzw. Entnahmestationen belüftet werden und die eigentliche Beschichtungskammer stets im evakuierten Zustand verbleiben kann. Natürlich kann bei Bedarf die gesamte Anlage belüftet werden.

Ein bekanntes Schleusenventil besteht aus einer mit fludischem Druck (pneumatisch, hydraulisch) aufblasbaren Schlauch- oder Membrandichtung, die im Bereich einer Durchführung des Bandsubstrats angeordnet ist. Im aufgeblasenen Zustand wird die Dichtung gegen eine jenseits des Bandsubstrats angeordnete (und vorzugsweise elastisch nachgiebige) Dichtfläche gepresst und spannt dabei das Bandsubstrat zwischen sich und der Dichtfläche ein.

Zwar kommt das Bandsubstrat im normalen Betrieb weder mit der Schlauch- oder Membrandichtung noch mit der besagten Dichtfläche in Berührung, jedoch muss der verfügbare Durchführungsspalt wegen des eng begrenzten Hubs der Schlauch- oder Membrandichtung recht eng bleiben. Bei eventuellen Schwingungen des Bandsubstrats während des Beschichtungsvorgangs kann es deshalb zu Berührungen zwischen dem Substrat und den Rändern der Durchführung kommen, die jedenfalls beim Verlassen der Beschichtungskammer zu Beschädigungen der soeben abgeschiedenen Beschichtung führen können. Ferner kann durch solche unerwünschten Kontakte sogar ein Abreißen des unter recht hoher Zugspannung stehenden Bandsubstrats verursacht werden, das wiederum einen Anlagenstillstand erzwingt.

Als problematisch erweist sich ferner die hohe Belastung der hohlen Dichtung im Vakuum, da sie extremen Druckdifferenzen ausgesetzt ist. Deshalb muss ihre Wand (Membran oder Schlauch) recht kräftig ausgelegt werden, was wiederum ihrer Flexibilität Abbruch tut. Hierdurch kann es zu Abdichtungsmängeln im Randbereich der Dichtung kommen, insbesondere dort, wo sie die Ränder des Bandsubstrats überdeckt (dort bildet sich eine Art Zwickel, dessen Fläche nach Möglichkeit natürlich minimiert werden muss).

Schließlich wirt bei dieser bekannten Form der Dichtung der einseitige Atmosphärendruck (aus der jeweils belüfteten Kammer) auf die Dichtung ein und drängt diese in die Vakuumkammer hinein.

DE 199 12 707 A1 offenbart eine Behandlungsanlage für flache, z. B. bandförmige Substrate. Durch deren (evakuierbares) Gehäuse sind zwei umlaufende Bänder geführt, die sich im Bereich der Durchführungen zum Ein- und Ausführen des Substrats berühren bzw. das zwischen ihnen mittransportierte flache Substrat einschließen. Hier wird durch die flächige Berührung der beiden Bänder mit dem Substrat eine hinreichende Dichtwirkung erzielt, jedoch zum Preis einer äußerst geringen Weite des Durchführungsspaltes und eines ständigen flächigen Kontakts des Substrats mit den Förderbändern.

DE 199 60 751 A1 beschreibt eine andere Schleuse dieser Art, die im Wesentlichen zwei Walzen mit flexiblen, schlauchaltigen Mänteln umfasst, welche einander berühren und zwischen denen ein Bandsubstrat durchlaufen kann. Zur Verbesserung der Dichtwirkung und zum Minimieren seitlicher Spalte zwischen den Walzen und den Rändern des durchlaufenden Substrats können die Walzenmäntel mindestens zeitweise mit Druck beaufschlagt werden. Dabei blähen sie sich auf und erhöhen einerseits den Anpressdruck auf das Substrat, andererseits schließen sie weitestgehend die besagten Seitenspalte. Im Bereich der Vakuumkammer sind die Mantelflächen der Walzen mit Stützrollen gegen übermäßige Ausdehnung in die Vakuumkammer hinein abgestützt, was einen recht hohen zusätzlichen Aufwand bedeutet.

DE 44 18 383 C2 befasst sich mit einer Vakuumschleuse, die ebenfalls mit zwei sich berührenden Walzen arbeitet, zwischen denen ein Bandsubstrat durchlaufen kann. Hier sind die Walzen lediglich mit einer Ummantelung aus elastisch-nachgiebigem Material ausgestattet.

Auch WO 99/50 472 beschreibt eine Vakuum-Bandbeschichtungsanlage, in der das Bandsubstrat zwischen Lade- bzw. Entladestation und der eigentlichen Reaktionskammer Walzenschleusen durchlaufen muss, die als Druckstufen dienen. Es kann dabei in einer Ausführung zwischen zwei aufeinander abrollenden Walzen, in einer anderen Ausführung zwischen einer Walze und einem feststehenden Abdichtungsblock durchlaufen. Diese Walzenschleusen können geöffnet werden, um z. B. ein neues Bandsubstrat einzufädeln. Zu diesem Zweck ist entweder eine der Walzen wegklappbar, indem ihre Rotationswelle um eine Schwenkachse klappbar gelagert ist, oder der Abdichtungsblock wird von der Walze abgezogen. In der Variante mit nur einer Walze wird das Band zwischen der Walze und dem Abdichtungsblock durch einen zwar sehr engen, jedoch letztlich offenen Spalt befördert, damit es nicht mechanisch überbeansprucht wird. Eine vollständige Abdichtung ist damit nicht möglich.

Aus der Druckschrift US 6,386,511 B1 ist ein Schleusenventil mit einem Gehäuse und einer Durchgangsöffnung bekannt, welches eine schwenkbar gelagerte Ventilkappe aufweist und bei dem der Verschluss durch Anliegen entsprechender Dichtungsflächen in der Ventilklappe and der Umfangsfläche nahe der Durchgangsöffnung erfolgt. Nachteilig ist, dass das Schleusenventil nicht für Bandsubstrate geeignet ist.

Der Erfindung liegt die Aufgabe zu Grunde, ein weiteres Schleusenventil für statische Abdichtungszwecke zu schaffen, mit dem die vorstehend erörterten Probleme vermieden oder jedenfalls reduziert werden.

Diese Aufgabe wird erfindungsgemäß mit den Merkmalen des Patentanspruchs 1 gelöst. Die Merkmale der Unteransprüche geben vorteilhafte Weiterbildungen der Erfindung an.

Der nebengeordnete Anspruch 11 gibt eine mit mindestens einem erfindungsgemäßen Schleusenventil ausgestattete Beschichtungsanlage an.

Man verwendet zur Verbesserung des Schleusenventils eine die Öffnung, durch welche das Bandsubstrat läuft, rahmenartig umgebende Dichtfläche. Mit ihr korrespondiert ein zylinderförmiger Walzenkörper, der auf einer Seite des Bandsubstrats angeordnet und beweglich mit einem mechanisch steuerbaren Hub gelagert ist. Dieser Körper ist so auf die Dichtfläche abgestimmt, dass er die von ihr umschriebene Öffnungsfläche vollständig überdecken und zugleich vollständig verschließen kann. Letzteres ist unabhängig davon zu sehen, ob sich ein Bandsubstrat durch die Öffnung erstreckt oder nicht.

Im ersteren Fall wird der Abschnitt des Bandsubstrats einfach zwischen dem Körper und der Dichtfläche eingespannt, wobei es sich flexibel verformt und bei geeigneter Auslegung der Dichtfläche und des Körpers auch keinerlei Schaden davon trägt. Der Körper tritt dabei natürlich nur mittelbar mit der Dichtfläche in Berührung, da das Bandsubstrat in der Art eines zusätzlichen Dichtmittels genutzt wird.

Diese Anordnung und Funktionsweise des Schleusenventils hat den Vorteil, dass bei jedem Wechsel des Bandes, d. h. in der Regel nach vollständigem Durchlauf einer Bandspule durch die Beschichtungsanlage, ein Abschnitt des Bandes in der Beschichtungskammer bzw. dem ggf. aus mehreren hintereinander liegenden Beschichtungskammern bestehenden Modul verbleiben kann. Mit diesem Abschnitt lässt sich nach dem Einlegen einer neuen Spule in die Abwickelkammer das neue Bandsubstrat fest verkleben, während auf der Aufwickelseite das Reststück auf eine leere Spule aufgezogen wird. Nach dem Evakuieren der beiden Lade- oder Wechselkammern kann der Anfang des neuen Bandsubstrats dann einfach mithilfe des Reststücks in die Beschichtungsanlage eingezogen werden.

Im anderen Fall, wenn also kein Bandsubstrat in der Öffnung vorhanden ist, verschließt der Körper die Öffnung durch unmittelbaren umlaufenden Kontakt mit der Dichtfläche.

Die Form des Körpers als zylindrische Walze hat den Vorteil, dass nicht unbedingt immer dieselben Stellen des Körpers mit der Dichtfläche zusammen wirken müssen. Man kann den Körper aber auch mit einem Querschnitt ausführen, der nur einem Abschnitt eines Kreisrings oder eines Walzenumfangs entspricht.

Nach einer vorteilhaften Ausführung haben der Körper und die Dichtfläche eine gekrümmte Kontur oder Fläche. Ist die Dichtfläche im Wesentlichen eben und nur der Körper gekrümmt, so wird der Körper so dimensioniert, dass er die jeweils einander gegenüber liegenden Dichtkanten der Dichtfläche berührt oder das Bandsubstrat zwischen sich und diesen Kanten einspannt.

Selbstverständlich muss ein vorhandener Krümmungsradius der Dichtfläche größer oder mindestens gleich dem Radius der auf dem Körper vorgesehenen, der Dichtfläche zugewandten gekrümmten Fläche sein, damit die vorstehend erwähnte Kantendichtwirkung erreicht wird.

Mit dieser Gestaltung vermeidet man insbesondere allzu starke Abknickwinkel des Bandsubstrats in der Schließstellung des Schleusenventils. Bei ebener Dichtfläche wird man diese also wenigstens schräg zur Lotrechten auf dem Bandsubstrat legen, so dass das vom Dichtkörper eingespannte Bandtrum beim Schließen des Schleusenventils lediglich in einem stumpfen Winkel abgeknickt wird. Bei gekrümmter Dichtflächenkontur wird man deren globale Krümmung entsprechend anlegen, wie später anhand des Ausführungsbeispiels noch näher erörtert wird.

Es versteht sich ohnehin, dass die Kanten der Dichtfläche einerseits aus einem nachgiebigen Material (z. B. Gummi, Weichkunststoff etc.) bestehen sollten, um die Dichtwirkung durch flächiges Anschmiegen zu verbessern, andererseits auch gut ausgerundet sein sollten, damit Beschädigungen (Knicke, Falten, Risse) an dem Bandsubstrat praktisch ausgeschlossen werden können. Auch der Körper selbst ist vorzugsweise mit einem elastisch nachgiebigen Oberflächenmaterial wie die Dichtfläche ausgestattet oder auch ganz aus einem solchen gefertigt.

Der Körper ist etwas breiter als die Öffnung, so dass er in Schließstellung sämtliche Kanten der Öffnung überdeckt und diese vollständig abdichtet.

Eine bevorzugte Ausführung des Schleusenventils umfasst ein Gehäuse, in dem die Öffnung, die Dichtfläche und der Körper nebst Lagerung und ggf. Antrieb modulartig zusammengefasst werden können.

Als Antrieb für das Umstellen oder -schalten des Körpers kommen reversierbare elektrische oder fluidische Antriebe in Frage, ggf. unter Zwischenschaltung eines geeigneten Getriebes oder Gestänges. Da das Schleusenventil im normalen Betrieb der Anlage nicht ständig hin und her geschaltet werden muss, könnte man jedoch auch einen manuellen Antrieb vorsehen, wobei ggf. der Körper mithilfe eines Kraftspeichers (z. B. mechanische oder Gasdruck-Feder) oder eines Kniehebels oder dgl. auf die Dichtfläche gespannt werden könnte. Einen manuellen Antrieb wird man ohnehin z. B. zum Einsatz bei einem Ausfall der Fremdkraftantriebe vorsehen.

Generell hätte ein solches Aufspannen des Dichtkörpers des Schleusenventils mithilfe eines Kraftspeichers unabhängig von der Antriebsart (Fremdkraft oder manuell) den Vorteil, dass stets eine gleich bleibende Anpresskraft bereitgestellt wird. Es versteht sich, dass ein solcher Kraftspeicher hinreichend kräftig ausgelegt werden muss, um auch einen eventuell vorhandenen Bandzug des Bandsubstrats zu überwinden und dieses sicher auf die Dichtfläche zu spannen.

Vorzüge dieser erfindungsgemäßen Lösung sind insbesondere:
➢ Die Spaltgröße der Öffnung kann größer als beim Stand der Technik gehalten werden, so dass bei geöffnetem Ventil eventuelle Schwingungen des Bandsubstrats aus seiner Laufebene hinaus nicht so bald zu Kontakten mit den Kanten der Öffnung führen. Beschädigungen an der Beschichtung und Bandabrisse werden so weitestgehend ausgeschlossen.
➢ Abweichend vom Stand der Technik wird kein mit fluidischem Druck arbeitender Ventilkörper mehr benötigt, so dass mit der erfindungsgemäßen Gestaltung auch dessen weiter oben erörterten Nachteilen abgeholfen werden kann.
➢ Es ist möglich, die Dichtfläche nebst dem zugehörigen Dichtkörper oder Ventilkörper in den periodisch zu belüftenden Arbeitsbereich (Abwickel- und Aufwickelmodule) einzubauen. Folglich drückt der Atmosphärendruck den Ventil- oder Dichtkörper nur umso fester auf die Dichtfläche.

Weitere Einzelheiten und Vorteile des Gegenstands der Erfindung gehen aus der Zeichnung eines Ausführungsbeispiels und deren sich im Folgenden anschließender eingehender Beschreibung hervor.

Es zeigen in vereinfachter, schematischer und nicht maßstäblicher Darstellung
- Fig. 1: eine perspektivische Teil-Schnitt-Ansicht einer Ausführungsform des erfindungsge- mäßen Schleusenventils;
- Fig. 2: die geöffnete Stellung des erfindungsgemäßen Schleusenventils;
- Fig. 3: die Schließstellung des erfindungsgemäßen Schleusenventils.

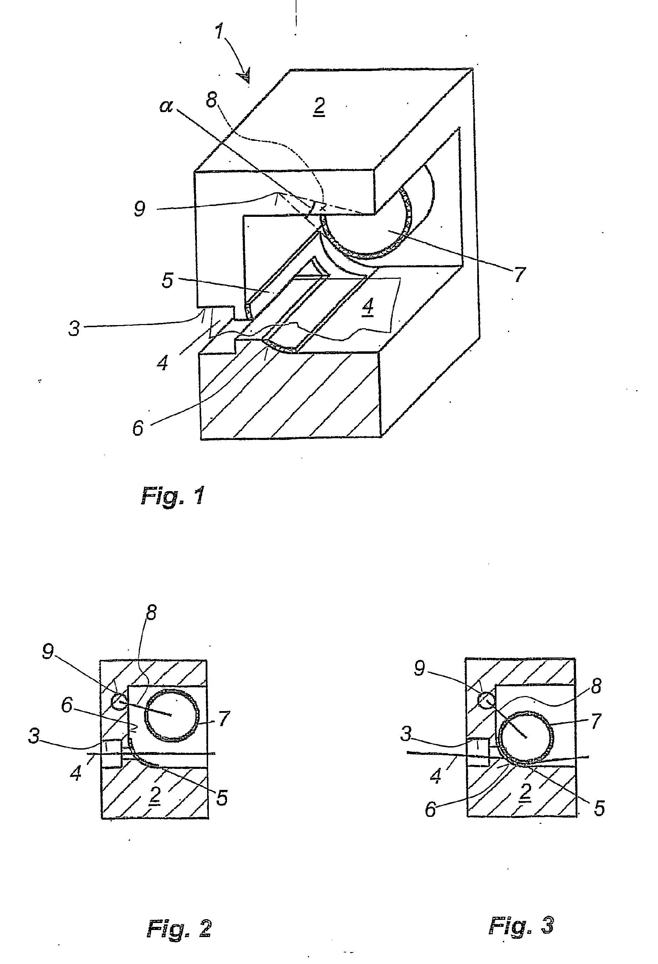

Gemäß Fig. 1 umfasst ein insgesamt mit 1 bezeichnetes Schleusenventil ein Gehäuse 2, in dem mindestens eine Öffnung 3 zum Durchführen eines Bandsubstrats 4 vorgesehen ist. In der bevorzugten Einbaulage ist links vom Gehäuse 2 und von der Öffnung 3 eine (nicht gezeigte) Vakuum-Beschichtungskammer (z. B. eine Sputterkammer oder dgl.), während sich rechts an das Gehäuse 2 eine im Wechsel evakuierbare und belüftbare Kammer anschließt (ebenfalls nicht dargestellt).

Letztere wird für den hier beschriebenen speziellen Anwendungsfall eine Wechselkammer sein, in der sich eine Achse zum Aufnehmen eines Ballen oder einer Spule eines Bandsubstrates befindet. Letzteres ist hier nur durch einen kleinen, mit 4 bezeichneten Teilabschnitt repräsentiert. Dieser Teilabschnitt des Bandsubstrats 4 erstreckt sich frei, d. h. ohne Kontakt, durch die Öffnung 3. Es ist insbesondere auch sicherzustellen, dass die beiden Seitenkanten des Bandsubstrats 4 im Betrieb nicht mit den beiden Seitenkanten der Öffnung in Berührung kommen. Berührungen nach oben oder unten (senkrecht zur Flächenebene des Substrats) werden nicht immer zu vermeiden sein, wenn das Bandsubstrat Schwingungen ausführt.

Man erkennt eine die Öffnung 3 auf der im Wechsel evakuierten und belüfteten (rechten) Seite rahmenartig umgebende Dichtfläche 5. Die zugehörige Innenfläche 6 des Gehäuses 2, in die die Öffnung 3 ausmündet, ist zumindest im Bereich des Austritts der Öffnung 3 zylindrisch gekrümmt.

Der Dichtungssitz im Gehäuse besteht bevorzugt aus Metall, während die eigentliche Dichtfläche 5 aus einem relativ dünnen, ggf. ebenfalls bandartigen Material besteht, oder z. B. aus einer Gummierung, die um die Öffnung 3 herum auf der besagten gekrümmten Innenfläche des Gehäuses 2 sicher, z. B. durch Kleben, festgelegt ist. Es ist sicherzustellen, dass die Fuge zwischen dem Material der Dichtfläche 5 und der Innenfläche 6 des Gehäuses 2 absolut vakuumdicht ist.

Im Gehäuse 2 ist ferner ein walzenförmiger Ventil- oder Dichtkörper 7 mithilfe eines Schwenkarms 8 schwenkbar um eine Achse 9 gelagert. Man erkennt den mit α bezeichneten Schwenkwinkel zwischen der (gezeichneten) Ruhestellung und einer Schließstellung des Dichtkörpers 7 an den beiden strichpunktierten Phantomdarstellungen des Schwenkarms 8. Die Walzenform des Dichtkörpers hat den Vorteil, dass nicht immer dieselbe Oberflächensektion seiner zylindrischen Oberfläche zur Anlage auf der Dichtfläche kommt. Grundsätzlich kann der Walzen-Dichtkörper nämlich auf dem Schwenkarm 8 seinerseits in der Art einer Walzrolle drehbar gelagert sein. Auch die Walze besteht aus Metall, und ihre Oberfläche ist mit einer Gummierung versehen.

Grundsätzlich könnten für den Dichtungssitz und die Walze auch Kunststoffe verwendet werden, soweit sie vakuumtauglich sind und insbesondere nicht zu sehr ausgasen.

Die Walze 7 ist länger als die Öffnung 3 breit ist, so dass sie auch die kurzen Kanten der Öffnung noch überdeckt und unmittelbar abdichten kann.

Fig. 2 ist eine Schnittansicht entsprechend der Fig. 1, die eine Gegenüberstellung mit der in Fig. 3 gezeigten Schließstellung des Schleusenventils ermöglicht. Gleiche Bauteile haben in allen Figuren gleiche Bezugszeichen.

Während in Fig. 2 das Bandsubstrat 4 offensichtlich frei durch die Öffnung 3 laufen kann und der Dichtkörper 7 einen größeren Abstand zu ihm einhält, ist in Fig. 3 nach einem Schwenken des Dichtkörpers um die Achse 9 bzw. den Winkel α (Fig. 1) das Bandsubstrat 4 fest zwischen dem Dichtkörper 7 und der unteren Kante der Dichtfläche 5 eingespannt. Es versteht sich, dass das Umschalten des Schleusenventils 1 in diese Schließstellung nur bei stillstehendem Bandsubstrat möglich sein sollte; die Anlage wird eine entsprechend abgestimmte Steuerung umfassen. Selbstverständlich wird das Schleusenventil aber noch vor dem Belüften des Spulenwechselraums in die Schließstellung geschaltet, wenn das Vakuum in der Beschichtungskammer aufrecht erhalten bleiben soll.

Damit an der Knickstelle des Bandsubstrats 4 im Bereich der Kante der Dichtfläche 5 keine Schäden auftreten, sollte mindestens letztere Kante eine gute Abrundung aufweisen und insbesondere aus einem möglichst weichen, wenn auch widerstandsfähigen Material bestehen.

Ferner ist die Krümmung der Dichtfläche 5 vorteilhaft so angeordnet, dass sich die Dichtfläche von der hier unterhalb des Bandsubstrats 4 liegenden Dichtkante ausgehend mit einem schräg im stumpfen Winkel zum Lot auf das (frei durchlaufende) Bandsubstrat stehenden Tangentenwinkel fortsetzt. Damit wird der in Fig. 3 gut sichtbare Zweck erreicht, dass das zwischen dem Dichtkörper 7 und der Dichtfläche 5 eingespannte Bandsubstrat nur in einen stumpfen, ggf. sogar abgerundeten Knick verformt wird.

Es sei daran erinnert, dass auf der rechten Seite des Dichtkörpers 7 bzw. des Gehäuses 2 Atmosphärendruck herrschen kann, während im normalen Betrieb der Anlage auf der linken Seite stets Vakuum herrscht. Erkennbar wird durch die Druckdifferenz von rechts nach links der Anpressdruck des Dichtkörpers 7 auf die Dichtfläche 5 bzw. das Bandsubstrat 4 noch erhöht, so dass insgesamt eine sehr hohe und zuverlässige Dichtwirkung erzielt wird.

Ein hier nicht gezeigter Fremdkraftantrieb für den Schwenkarm 8 und den Dichtkörper 7 kann innerhalb oder außerhalb des Gehäuses 2 angeordnet sein. Wird dieser Antrieb innen liegend angeordnet, so kann vorteilhaft eine Durchführung eines beweglichen Teils (Welle auf der Achse 9) nebst dem entsprechenden Dichtungsaufwand entfallen. Eventuelle Leitungsdurchführungen für elektrische Kabel -bei einem elektrischen Antrieb- oder Schläuche -für einen hydraulischen oder pneumatischen Antrieb- können mit geringerem Aufwand abgedichtet werden.

## Patentansprüche

1. Schleusenventil (1), insbesondere für eine Bandbehandlungs- oder - beschichtungsanlage, das zum Verschließen einer von einem flexiblen Bandsubstrat (4) durchlaufenen, schlitzartigen Öffnung (3) zwischen zwei unterschiedlichen Bereichen einer Anlage vorgesehen ist und mindestens einen beweglichen Dichtkörper (7) aufweist, der mit einer Dichtfläche (5) zusammen wirkt und dabei die Öffnung (3) verschließt, wobei ggf. das Bandsubstrat (4) beim Schließen des Schleusenventils (1) zwischen dem Körper (7) und der Dichtfläche (5) eingespannt wird, **dadurch gekennzeichnet, dass** die Dichtfläche (5) die Öffnung (3) rahmenartig umgibt und der Körper (7) zum Schließen der Öffnung (3) als zylindrische Walze ausgebildet ist und so auf die Dichtfläche (5) pressbar und abgestimmt ist, dass er die Öffnung (3) durch wenigstens mittelbares Anlegen an die Kanten der Dichtfläche (5) verschließt, unabhängig davon, ob sich das Bandsubstrat (4) durch die Öffnung erstreckt oder nicht.

2. Schleusenventil nach Anspruch 1, **dadurch gekennzeichnet, dass** das Bandsubstrat (4) durch den Körper (7) auf eine Dichtkante der Öffnung (3) andrückbar ist, und dass eine Tangente an die Dichtfläche (5) im Bereich der besagten Dichtkante einen stumpfen Winkel zur Längs- oder Durchlaufrichtung des Bandsubstrats (B) bildet.

3. Schleusenventil nach Anspruch 1 oder 2, bei dem der Körper (7) und die Dichtfläche (5) eine gekrümmte Kontur aufweisen, wobei ein vorhandener Radius der Dichtfläche (5) größer oder gleich dem Radius der auf dem Körper (7) vorgesehenen, der Dichtfläche (5) oder dem Bandsubstrat (4) zugewandten gekrümmten Fläche ist.

4. Schleusenventil nach Anspruch 1, 2 oder 3, bei dem die Dichtfläche (5) und/oder der Körper (7) mit einem elastisch nachgiebigen Oberflächenmaterial ausgeführt sind.

5. Schleusenventil nach einem der vorstehenden Ansprüche, dessen Dichtfläche (5) aus einem flachen, nachgiebigen Material gefertigt und rahmenartig im Bereich des Umfangsrandes der Öffnung (3) mit einer Wand flächig dicht verbunden, insbesondere verklebt ist.

6. Schleusenventil nach einem der vorstehenden Ansprüche, dessen Körper (7) schwenkbar gelagert ist.

7. Schleusenventil nach einem der vorstehenden Ansprüche mit einem mindestens die Öffnung (3), die Dichtfläche (5) und den Körper (7) aufnehmenden Gehäuse (2).

8. Schleusenventil nach einem der vorstehenden Ansprüche, dessen Körper (7) mithilfe eines Fremdkraftantriebs zwischen einer Ruhestellung und einer Schließstellung hin und her beweglich ist.

9. Schleusenventil nach Anspruch 6 und 7, bei dem der Fremdkraftantrieb ebenfalls an oder in dem Gehäuse (2) angeordnet ist.

10. Schleusenventil nach einem der vorstehenden Ansprüche, bei dem der Körper (7) mithilfe eines Kraftspeichers mit vorbestimmter Auflagekraft auf die Dichtfläche (5) spannbar ist.

11. Behandlungsanlage für durchlaufende bandartige Substrate, insbesondere für flexible Bandsubstrate, mit mindestens einer evakuierbaren Behandlungskammer und mindestens einer weiteren, insbesondere zum Ab- oder Aufwickeln des Bandsubstrates vorgesehen Kammer, welche Kammern durch eine Öffnung miteinander verbunden sind, durch welche das Bandsubstrat führbar ist, **gekennzeichnet durch** mindestens ein an der besagten Öffnung vorgesehenes Schleusenventil nach einem der vorstehenden Ansprüche.

12. Behandlungsanlage nach Anspruch 11, in der der Dichtkörper (7) des mindestens einen Schleusenventils und die ihm zugeordnete Dichtfläche (5) der weiteren, fallweise zu belüftenden Kammer zugewandt sind.

## Claims

1. An isolating valve (1), particularly for a strip processing or coating unit, which is provided for sealing a slit-like opening (3), through which a flexible strip substrate (4) passes, between two different regions of a unit and includes at least one movable sealing body (7), which cooperates with a sealing surface (5) and thus seals the opening (3), wherein the strip substrate (4) is optionally clamped between the body (7) and the sealing surface (5) when the isolating valve (1) is closed, **characterised in that** the sealing surface (5) surrounds the opening (3) in the manner of a frame and the body (7) for closing the opening (3) is constructed in the form of a cylindrical roller and may be pressed against the sealing surface (5) and is so matched to it that it seals the opening (3) by at least indirect engagement with the edges of the sealing surface (5), independently of whether the strip substrate (4) extends through the opening or not.

2. An isolating valve as claimed in Claim 1, **characterised in that** the strip substrate (4) may be pressed by the body (7) onto a sealing edge of the opening (3) and that a tangent to the sealing surface (5) in the region of the said sealing edge defines an obtuse angle to the longitudinal direction or direction of movement of the strip substrate (B).

3. An isolating valve as claimed in Claim 1 or 2, in which the body (7) and the sealing surface (5) have a curved contour, whereby a radius of the sealing surface (5) is larger than or equal to the radius of the curved surface provided on the body (7) and directed towards the sealing surface (5) or the strip substrate (4).

4. An isolating valve as claimed in Claim 1, 2 or 3, in which the sealing surface (5) and/or the body (7) are constructed with an elastically resilient surface material.

5. An isolating valve as claimed in one of the preceding claims, the sealing surface (5) of which is made from a flat, resilient material and is sealingly connected, particularly by adhesive, to the surface of a wall in the manner of a frame in the vicinity of the peripheral edge of the opening (3).

6. An isolating valve as claimed in one of the preceding claims, the body (7) of which is pivotally mounted.

7. An isolating valve as claimed in one of the preceding claims with at least one housing (2) accommodating the opening (3), the sealing surface (5) and the body (7).

8. An isolating valve as claimed in one of the preceding claims, the body (7) of which is movable back and forth with the aid of an independent actuator between a rest position and a closed position.

9. An isolating valve as claimed in Claim 6 and 7, in which the independent actuator is also arranged on or in the housing (2).

10. An isolating valve as claimed in one of the preceding claims, in which the body (7) may be urged against the sealing surface (5) with a predetermined engagement force with the aid of a force accumulator.

11. A treatment unit for strip-like substrates passing through it, particularly for flexible strip substrates, with at least one evacuable treatment chamber and at least one further chamber provided, in particular, for winding up or unwinding the strip substrate, which chambers are connected together by an opening, through which the strip substrate is guidable, **characterised by** at least one isolating valve in accordance with one of the preceding claims provided at the said opening.

12. A treatment unit as claimed in Claim 11, in which the sealing body (7) of the at least one isolating valve and the sealing surface (5) associated with it are directed towards the further chamber which is to be ventilated from time to time.

## Revendications

1. Clapet d'arrêt (1), notamment pour une installation de traitement ou de revêtement de bandes, ledit clapet d'arrêt étant prévu pour fermer une ouverture (3) en forme de fente qui est traversée par une bande de substrat flexible (4) et qui est située entre deux régions différentes d'une installation et comportant au moins un corps d'étanchéité mobile (7) qui coopère avec une surface d'étanchéité (5) pour fermer l'ouverture (3), la bande de substrat (4) étant éventuellement serrée entre le corps (7) et la surface d'étanchéité (5) lors de la fermeture du clapet d'arrêt (1), **caractérisé en ce que** la surface d'étanchéité (5) entoure l'ouverture à la manière d'un cadre et, pour fermer l'ouverture (3), le corps (7) est conformé en tambour cylindrique et est adapté à la surface d'étanchéité (5), sur laquelle il peut être pressé, de façon à fermer l'ouverture (3) en portant au moins indirectement sur les bords de la surface d'étanchéité (5), indépendant du fait que la bande de substrat (4) s'étende ou non à travers l'ouverture.

2. Clapet d'arrêt selon la revendication 1, **caractérisé en ce que** la bande de substrat (4) peut être pressée par le corps (7) sur un bord d'étanchéité de l'ouverture (3), et **en ce qu'**une tangente à la surface d'étanchéité (5) forme, dans la région dudit bord d'étanchéité, un angle obtus par rapport à la direction longitudinale ou de traversée de la bande de substrat (B).

3. Clapet d'arrêt selon la revendication 1 ou 2, dans lequel le corps (7) et la surface d'étanchéité (5) présentent un contour incurvé, un rayon présent de la surface d'étanchéité (5) étant supérieur ou égal au rayon de la surface incurvée prévue sur le corps (7) et dirigée vers la surface d'étanchéité (5) ou la bande de substrat (4).

4. Clapet d'arrêt selon la revendication 1, 2 ou 3, dans lequel la surface d'étanchéité (5) et/ou le corps (7) sont réalisés avec un matériau de surface déformable élastiquement.

5. Clapet d'arrêt selon l'une des revendications précédentes, dont la surface d'étanchéité (5) est fabriquée à partir d'un matériau plat déformable et est reliée, notamment collée, à une paroi, de façon étanche et à plat, à la manière d'un cadre, dans la région du bord périphérique de l'ouverture (3).

6. Clapet d'arrêt selon l'une des revendications précédentes, dont le corps (7) est monté de façon à pouvoir pivoter.

7. Clapet d'arrêt selon l'une des revendications précédentes, comportant un boîtier (2) recevant au moins l'ouverture (3), la surface d'étanchéité (5) et le corps (7).

8. Clapet d'arrêt selon l'une des revendications précédentes, dont le corps (7) est mobile suivant un mouvement alternatif entre une position de repos et une position de fermeture à l'aide d'un entraînement actionné par une force extérieure.

9. Clapet d'arrêt selon les revendications 6 et 7, dans lequel l'entraînement actionné par une force extérieure est également disposé sur ou dans le boîtier (2).

10. Clapet d'arrêt selon l'une des revendications précédentes, dans lequel le corps (7) peut être serré avec une force d'appui prédéterminée sur la surface d'étanchéité (5) à l'aide d'un accumulateur d'énergie.

11. Installation de traitement pour substrats traversants se présentant sous la forme de bandes, notamment pour des bandes de substrat flexibles, ladite installation de traitement comportant au moins une chambre de traitement dans laquelle on peut faire le vide et au moins une autre chambre qui est prévue notamment pour dérouler ou enrouler la bande de substrat, lesquelles chambres sont reliées entre elles par une ouverture que peut traverser la bande de substrat, **caractérisé par** au moins un clapet d'arrêt, selon l'une des revendications précédentes, qui est prévu au niveau de ladite ouverture.

12. Installation de traitement selon la revendication 11, dans laquelle le corps d'étanchéité (7) de l'au moins un clapet d'arrêt et la surface d'étanchéité (5) qui lui est associée sont dirigés vers l'autre chambre à ventiler de temps à autre.
